# EUROPÄISCHE PATENTANMELDUNG

(11) **EP 1 637 032 A1**
(43) Veröffentlichungstag der Anmeldung: **22.03.2006**
(21) Anmeldenummer: 05019504.9
(22) Anmeldetag: 08.09.2005
(51) Int. Cl.: A01G 13/02

(54) **Pflanzenabdeckung**

(30) Priorität: 17.09.2004 DE 102004045272
(71) Anmelder: Roth, Roland, 64850 Schaafheim (DE)
(72) Erfinder: Roth, Roland, 64850 Schaafheim (DE)
(74) Vertreter: Katscher Habermann Patentanwälte

(57) **Zusammenfassung**

Um Agrarflächen, insbesondere Hügelbeeten, vor Erosion zu schützen und gleichzeitig gute thermische Eigenschaften bei ausreichendem Luftaustausch sowie ein einfaches Düngen und Bewässern unter einer Abdeckung, welche gegen ein Wegwehen geschützt ist, zu ermöglichen, stellt die Erfindung eine Pflanzenabdeckung, insbesondere für Hügelbeete bereit, bei der innerhalb einer Folie, dass heißt in der Folienfläche, ein Vlies angeordnet ist, welches mit der Folie fest verbunden ist und die Folie an ihren auslaufenden Rändern Taschen zur Aufnahme von Beschwermaterial auf.

## Beschreibung

Die Erfindung betrifft eine Pflanzenabdeckung, insbesondere für Hügelbeete, bei der innerhalb einer Folie ein Vlies angeordnet ist und die Folie an ihren auslaufenden Rändern Taschen zu Aufnahme von Beschwermaterial aufweist.

Im Bereich der Landwirtschaft und des Gartenbaus werden bekanntlich Folien verwendet, um auf der einen Seite unterhalb der Folie ein Mikroklima zu erzielen und andererseits Agrarflächen vor Erosionen zu schützen. Diese Folien werden über die betreffende Agrarfläche gespannt/gelegt und mittels verschiedener Mechanismen gegen ein Abdecken, zum Beispiel durch Wind, geschützt.

Die DE 203 15 335 U1 beschreibt eine Folie zum Abdecken von landwirtschaftlichen Dämmen, insbesondere Erdbeer- oder Kartoffelanpflanzungen. Die hier beschriebene Folie ist in Bereichen dampfdicht ausgebildet, und verfügt an den Randbereichen über Taschen zur Aufnahme von Beschwermaterial. Um einen Gasaustausch zwischen Luft und Beet zu ermöglichen, weist die Folie in ihrem mittleren Bereich eine Vielzahl von Öffnungen auf. Auf diese Weise wird zwar eine ausreichend thermische Isolierung ermöglicht, allerdings besteht die Gefahr, dass unter der Folie Schimmel auftreten kann. Zum Beschweren der Folie wird in die Taschen Sand gefüllt. Eine derart gestaltete Folie ermöglicht kein einfaches Bewässern und Düngen der Pflanzen.

Aus der DE 195 00 635 C2 ist eine Abdeckung für Spargelfelder bekannt, die aus einer Folienbahn besteht, die entlang ihrer beiden Längsränder umgefaltet ist, so dass Taschenräume entstehen, die eine Abdeckung der Folie durch Windeinflüsse verhindern soll. Auch diese Folie hat den Nachteil, dass kein ausreichender Luftaustausch mit dem Boden stattfinden kann. Ebenso ist mit dieser Folie kein einfaches Bewässern und Düngen der Pflanzen möglich.

Die Erfindung hat sich daher die Aufgabe gestellt, eine Pflanzenabdeckung bereitzustellen, welche Agrarflächen, insbesondere Hügelbeeten, vor Erosion schützt, gute thermische Eigenschaften bei ausreichendem Luftaustausch gestattet, somit also ein Schimmeln unter der Abdeckung verhindert und gleichzeitig eine einfache Handhabung beim Bewässern und Düngen der Pflanzen ermöglicht.

Die Aufgabe der Erfindung wird in überraschend einfacher Weise bereits durch einen Gegenstand mit den Merkmalen eines anhängenden unabhängigen Anspruchs gelöst.

Vorteilhafte Weiterbildungen der Erfindung sind in den Unteransprüchen definiert.

Erfindungsgemäß wird eine Pflanzenabdeckung, insbesondere für Hügelbeete bereitgestellt, bei der innerhalb einer Folie, dass heißt in der Folienfläche, ein Vlies angeordnet ist, welches mit der Folie fest verbunden ist. Die Folie weist ferner an ihren auslaufenden Rändern Taschen zur Aufnahme von Beschwermaterial auf.

Unter einer Folie wird hier insbesondere ein flächiges, entlang der Fläche homogenes, eine vorbestimmte Zugfestigkeit aufweisendes und flexibles Gebilde aus Metall oder Kunststoff verstanden.

Unter einem Vlies wird hier insbesondere eine zusammenhängende Faserschicht bzw. Faserschichten verstanden, welche aus Kunststoffen und/oder Naturstoffen gefertigt ist/sind.

Ein solches Vlies ermöglicht, dass die Pflanzen einfach bewässert und gedüngt werden können. Die Nährstoffe und das Wasser, die auf das Vlies gegeben werden oder gelangen, können durch das Vlies hindurch eindringen und so in den Boden gelangen. Dort stehen sie dann den Pflanzen zum Wachstum zur Verfügung.

Die Folie ist so ausgebildet, dass diese an den Rändern einer Pflanz-/Agrarfläche, insbesondere eines Beetes, aufliegt. Damit wird das Beet vor Erosionen geschützt und eine optimale Ausnützung der Sonnenstrahlung erreicht, so dass unterhalb der Folie ein gewünschtes Mikroklima entstehen kann.

Die Taschen an den Rändern der Folie tragen dazu bei, dass, sofern diese mit Material beschwert, die Folie nicht vom Wind weggeweht werden kann und somit das Beet für lange Zeit geschützt ist.

Vorteilhafterweise weist die Pflanzenabdeckung im Vliesbereich Aussparungen insbesondere für Pflanzen auf.

Dadurch wird erreicht, dass unter dem Vlies Pflanzen gezüchtet werden können, die dann durch die Aussparungen ans Licht wachsen können und/oder, dass Pflanzen einfach in die Aussparungen gesetzt werden können. Dabei ist es vorteilhaft, wenn die Aussparungen an ihren Rändern verstärkt sind und/oder mit Farbe markiert sind, damit die Aussparungen besser zu sehen sind und so ein schnelleres und einfacheres Setzten der Pflanzen möglich wird. Durch die Verstärkung wird ferner einem möglichen Ausreißen, insbesondere aufgrund von Witterungsverhältnissen, wesentlich entgegengewirkt.

Das Vlies ist dabei vorteilhafterweise derart gestaltet, dass es ein für Licht undurchlässiges, für Wasser und Nährstoffe, insbesondere Salze, jedoch durchlässiges Material aufweist.

Es hat sich gezeigt, dass ein derart ausgestaltetes Vlies viele Vorteile aufweist. So wird gewährleistet, dass die unter dem Vlies, bzw. durch die Aussparungen des Vlies wachsenden Pflanzen ausreichend mit Nährstoffen und Wasser versorgt werden, der Boden unter dem Vlies nicht das Schimmeln anfängt und gleichzeitig, aufgrund der Lichtundurchlässigkeit, sich keine unerwünschten Pflanzen/Unkraut unter dem Vlies ausbilden können. Die erfindungsgemäße Pflanzenabdeckung ermöglicht außerdem, eine Düngung mit herkömmlichen, konventionellem Mitteln. Hierdurch ist eine Kostenersparnis möglich.

In einer vorteilhaften Weiterentwicklung sieht die Erfindung vor, dass das Vlies insbesondere aus einem polymeres Material umfasst, welches insbesondere UVbeständig ist.

Es hat sich gezeigt, dass derartige Materialien besonders haltbar und witterungsbeständig sind und daher eine hohe Widerverwendbarkeit gewährleisten.

Vorteilhafterweise ist das Vlies an zumindest zwei, insbesondere im Wesentlichen gegenüberliegenden, Seitenrändern mit der Folie fest verbunden. Es entsteht somit eine Art Abdeckbahn, die über bahnförmige Beete gelegt werden kann.

Ferner ist in einer weiteren vorteilhaften Ausgestaltungsform vorgesehen, dass das Vlies vollständig von der Folie umschlossen wird. Hierdurch ist es möglich Beete, die runde oder quadratische Formen aufweisen, abzudecken.

Die Folie umfasst vorteilhafterweise ein Material, welches wasser- und lichtundurchlässig ist. Dadurch ist gewährleistetet, dass die Folie die Beetränder ausreichend vor Erosion schützt und unterhalb der Folie keine weiteren Pflanzen keimen.

Auch ist es von Vorteil, wenn die Folie ein UV-beständiges Material umfasst. Die Pflanzenabdeckung, die extremen Belastungen im Freien ausgesetzt ist, kann durch die Wahl eines derartigen Materials öfters verwendet werden. Hierbei hat sich gezeigt, dass besonders Polymere umfassende Materialien vorteilhaft sind.

Erfindungsgemäß werden die Folie und das Vlies kraftschlüssig, insbesondere mittels Klemmen, oder stoffschlussig, insbesondere mittels Verschweißen oder Verkleben, miteinander verbunden. Die Verbindung erfolgt dabei vorzugsweise am minimalen Krümmungsradius des Beetes.

Eine derart gestaltete Pflanzenabdeckung ermöglicht, dass alle Pflanzen auf dem Beet, auf Grund der positiven Eigenschaften des Vlies, mit Nährstoffen versorgt werden können.

Damit die Pflanzenabdeckung nicht durch Wind weggeweht wird, sieht die Erfindung vor, dass die Taschen zur Aufnahme von Beschwermaterial, Taschen zur Aufnahme von Wasser sind. Die Taschen werden durch einen nach außen gelegten Umschlag der Folie gebildet, welcher in horizontalen Teilabschnitten feste Verbindungen mit der Folie und offene Bereiche aufweist. Oberhalb der Verbindungen, zwischen der Folie und einem Folienüberschlagüberstand sind Kanäle ausgebildet, in welchen sich Wasser ansammeln kann und in die Taschen geleitet werden kann.

Dabei stellen die offenen Bereiche, welche mittels einer Spreizvorrichtung zwischen Folienumschlag und der Folie geöffnet sind, Zuflussbereiche für das Wasser in die Taschen dar. Die Taschen sind durch vertikale Innenbegrenzungen unterbrochen, so dass einzelne Kammern entstehen. Ferner sieht die Erfindung vor, dass die Innenbegrenzungen unterhalb der offenen Bereiche liegen. Dabei sind die Innenbegrenzungen mittels einer thermischen Schweißverbindung zwischen Folie und Folienumschlag ausgebildet.

Dadurch wird ermöglicht, dass Regenwasser seitlich an der Folie herunterfliesen kann und durch die offenen Bereiche die durch die Spreizvorrichtungen entstehen, in die einzelnen Kammern der Taschen fließen kann. Dadurch werden die Taschen mit Wasser befüllt und beschweren die Seitenränder der Folie.

Die derart gestalteten Taschen ermöglichen ein einfaches Entleeren, sofern die Abdeckbahn von dem Beet entfernt werden soll, da lediglich durch Anheben der Abdeckbahn über die Dammkrone, Tasche für Tasche, das Wasser hinausläuft.

In einer vorteilhaften Ausführung, sieht die Erfindung vor, dass die Taschen in der auf dem Beet aufliegenden Seite eine Innenlochung aufweisen, die vorteilhafterweise etwa in Höhe von 2/3 der maximalen Füllhöhe angebracht ist. Durch diese Innenlochung kann überschüssiges Wasser in das Beet abgegeben werden, so dass zusätzlich zur Beschwerung auch eine Bewässerung der Beete erfolgen kann.

Besonders vorteilhaft ist es, wenn die Folie und/oder das Vlies auf der dem Beet abgewandten Seite eine wärmeabsorbierende oder wärmereflektierende Schicht aufweisen. Diese Schichten sind dann vorteilafterweise eine schwarze Farbschicht oder eine weiße oder silberne Schicht. Durch eine schwarze Folie wird eine effektivere Ausnutzung der Wärmestrahlung gewährleistet und durch eine silberne/weiße Folie kann eine Reflektion der Wärmestrahlung ermöglicht werden. Somit ist das Beet jeweils an die örtlichen Temperatur und Lichtgegebenheiten optimal angepasst und es entsteht das gewünschte Mikroklima unterhalb der Pflanzenabdeckung, welches insgesamt somit eine Ertragssteigerung begünstigt.

Die Erfindung stellt daher ein Wassertaschenfolienvlies bereit, welches insbesondere für Hügelbeete genutzt werden kann.

Die Erfindung wird nachfolgend genauer anhand einer bevorzugten Ausführungsform und unter Bezugnahme auf die beigefügten Figuren näher erläutert. Dabei verweisen gleiche Bezugszeichen in den Figuren auf gleiche oder ähnliche Teile.

Es zeigen:
- Fig. 1: eine schematische Darstellung eines Querschnittes durch ein Hügelbeet, welches mit einer erfindungsgemäßen Pflanzenabdeckung bedeckt ist,
- Fig. 2: eine schematische Darstellung eines Querschnittes durch eine Tasche einer erfindungsgemäßen Pflanzenabdeckung, und
- Fig. 3: eine schematische Darstellung der Seitenansicht mehrerer Taschen einer erfindungsgemäßen Pflanzenabdeckung.

### Beispielhafte Ausführungsformen

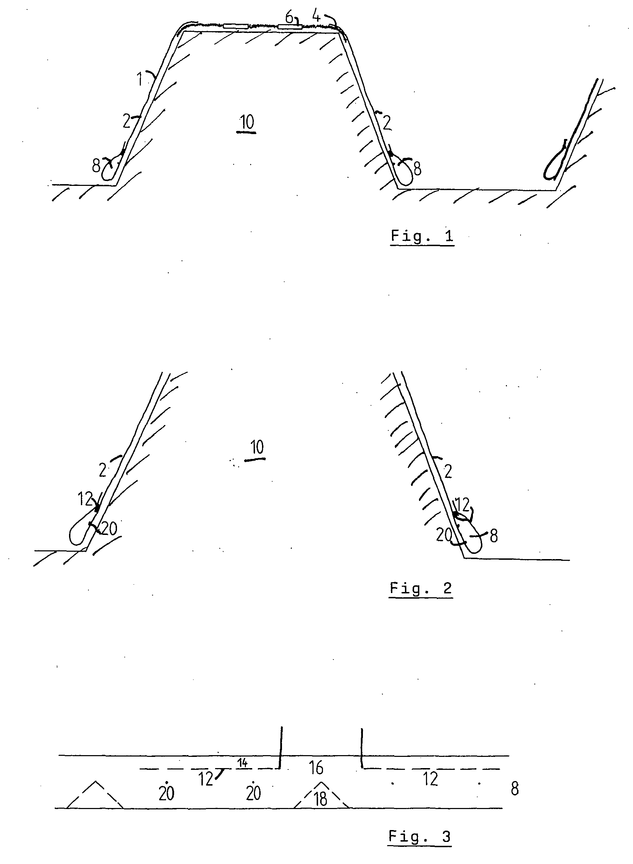

Figur 1 zeigt beispielhaft einen Querschnitt eines Hügelbeetes mit einer Pflanzenabdeckung.

Über ein Hügelbeet 10 wird eine erfindungsgemäße Pflanzenabdeckung 1 gelegt. Die erfindungsgemäße Pflanzenabdeckung 1 ist derart gestaltet, das die beiden Außenseiten der Pflanzenabdeckung 1 aus je einer Folie 2 bestehen und in der Mitte ein Vlies 4 angebracht ist. Dabei ist das Vlies 4 an dem minimalen Krümmungsradius des Beetes nahe der Seitenränder mit der Folie 2 verbunden. Das Vlies 4 ist mit Löchern 6 versehen, durch die die Pflanzen wachsen können.

Werden die Pflanzen gesetzt, nachdem die Pflanzenabdeckung 1 bereits über das Beet gelegt wurde, bietet es sich an, die Ränder der Löcher 6 farbig zu markieren um so ein einfacheres Pflanzen zu ermöglichen, da die Löcher 6 besser erkennbar sind. Hier ist es auch denkbar, die Löcher 6 an ihren Rändern zu verstärken.

Die Folie 2 ist eine Folie 2 aus einem polymeren Material, welche eine schwarze Farbe aufweist. Das verwendete Vlies 4 ist aus einem Material aufgebaut, welches Wasser und Nährstoffe hindurch lässt, jedoch kein Licht.

An den auslaufenden Rändern der Folie 2 weist die Pflanzenabedeckfolie 1 Taschen 8 auf, die zur Beschwerung der Pflanzenabdeckung 1 gegen ein Fortwehen durch den Wind dienen sollen.

In Figur 2 ist eine schematische Darstellung durch den Querschnitt durch eine Tasche 8 gemäß der Erfindung gezeigt.

Die Tasche 8 wird gebildet, in dem die Folie 2 an ihren auslaufenden Rändern umgeschlagen wird.

Dabei ist, wie in Figur 3 dargestellt, die Folie 2 an bestimmten Teilabschnitten 12, nachdem sie umgeschlagen worden ist, wieder fest mit der anderen Seite der Folie 2 verbunden. Diese Verbindung ist eine thermische Verbindung und somit sehr kostengünstig. Es entsteht zwischen der Verbindung und einem Folienüberstand ein Kanal 14 in dem das Wasser, welches zum Beispiel bei Regen an der Folie 2 hinunterläuft, aufgefangen wird. Der Kanal 14 erinnert daher an eine Art Dachrinne.

Das sich in dem Kanal 14 befindende Wasser kann über bestimmte Zuflussbereiche 16 welche mittels eines Spreizmechanismus ausgebildet werden, in die einzelnen Taschen 8 fliesen. Die einzelnen Taschen 8 sind voneinander durch vertikale Innenbegrenzungen 18 unterbrochen die sich unterhalb der Zuflussbereiche 16 befinden. Dabei sind diese Innenbegrenzungen 18 eine thermische Verschweißung der Folie 2 in Form eines Dreiecks, die jedoch nicht so stark ausgebildet sind, dass die einzelnen Taschen 8 gänzlich voneinander abgetrennt sind. Das sich in dem Kanal 14 befindende Wasser hat so die Möglichkeit über die Zuflussbereiche 16 in zwei verschiedene Kammern 8 zu gelangen. Die Taschen 8 weisen eine Innenlochung 20 auf. Dabei ist die Innenlochung 20 in etwa 2/3 der maximalen Füllhöhe des Wasserstandes in der Tasche 8 angebracht. Anwendungs- oder Pflanzenspezifisch kann die Innenlochung jedochh höher oder tiefer angeordnet sein. Die maximale Füllhöhe ist dann erreicht, wenn das Wasser von einer Tasche 8 in die andere Tasche 8 hineinläuft und daher auch durch die Innenlochung 20 heraustritt. Somit entsteht ein zusätzlicher Mechanismus mit dem das Hügelbeet 10 bewässert werden kann.

## Patentansprüche

1. Pflanzenabdeckung (1) insbesondere für Hügelbeete (10) umfassend
a) ein innerhalb einer Folie (2) angeordnetes Vlies (4), welches mit der Folie (2) fest verbunden ist, wobei die
b) Folie (2) an ihren auslaufenden Rändern Taschen (8) zur Aufnahme von Beschwermaterial aufweist.

2. Pflanzenabdeckung (1) nach Anspruch 1, **dadurch gekennzeichnet, dass** das Vlies (4) Aussparungen (6) insbesondere für Pflanzen aufweist.

3. Pflanzenabdeckung (1) nach Anspruch 1 oder 2 **dadurch gekennzeichnet, dass** das Vlies (4) ein für Licht undurchlässiges Material aufweist.

4. Pflanzenabdeckung (1) nach einem der vorhergehenden Ansprüche, **dadurch gekennzeichnet, dass** das Vlies (4) ein Material aufweist, welches für Wasser und Nährstoffe, insbesondere Salze, durchlässig ist.

5. Pflanzenabdeckung (1) nach einem der vorhergehenden Ansprüche, **dadurch gekennzeichnet, dass** das Vlies (4) zumindest ein polymeres Material umfasst.

6. Pflanzenabdeckung (1) nach einem der vorhergehenden Ansprüche, **dadurch gekennzeichnet, dass** das Vlies (4) ein UV-beständiges Material aufweist.

7. Pflanzenabdeckung (1) nach einem der vorhergehenden Ansprüche, **dadurch gekennzeichnet, dass** das Vlies (4) an zumindest zwei Seitenrändern mit der Folie (2) fest verbunden ist.

8. Pflanzenabdeckung (1) nach einem der vorhergehenden Ansprüche, **dadurch gekennzeichnet, dass** das Vlies (4) vollständig von der Folie (2) umschlossen wird.

9. Pflanzenabdeckung (1) nach einem der vorhergehenden Ansprüche, **dadurch gekennzeichnet, dass** die Folie (2) ein Material umfasst, welches wasser- und lichtundurchlässig ist.

10. Pflanzenabdeckung (1) nach einem der vorhergehenden Ansprüche, **dadurch gekennzeichnet, dass** die Folie (2) einem UV-beständiges Material umfasst.

11. Pflanzenabdeckung (1) nach einem der vorhergehenden Ansprüche, **dadurch gekennzeichnet, dass** die Folie (2) ein polymeres Material umfasst.

12. Pflanzenabdeckung (1) nach einem der vorhergehenden Ansprüche, **dadurch gekennzeichnet, dass** die Folie (2) und das Vlies (4) kraftschlüssig insbesondere mittels Klemmen oder stoffschlussig, insbesondere verschweißt oder verklebt, miteinander verbunden sind.

13. Pflanzenabdeckung (1) nach einem der vorhergehenden Ansprüche, **dadurch gekennzeichnet, dass** die Taschen (8) zur Aufnahme von Beschwermaterial Taschen (8) zur Aufnahme vom Wasser sind.

14. Pflanzenabdeckung (1) nach einem der vorhergehenden Ansprüche, **dadurch gekennzeichnet, dass** die Taschen (8) ausgebildet sind durch einen nach außen gelegten Umschlag der Folie (2), welcher in horizontalen Teilabschnitten eine feste Verbindung und offene Bereiche mit der Folie (2) aufweist und wobei zwischen der Verbindung und einem Folienüberschlagüberstand ein Kanal (14) ausgebildet ist.

15. Pflanzenabdeckung (1) nach einem der vorhergehenden Ansprüche, **dadurch gekennzeichnet, dass** in den offenen Bereichen durch eine Spreizvorrichtung Zuflussbereiche (16) für Wasser in die Taschen ausgebildet sind.

16. Pflanzenabdeckung (1) nach einem der vorhergehenden Ansprüche, **dadurch gekennzeichnet, dass** die Taschen (8) durch vertikale Innenbegrenzungen (18) unterbrochen sind.

17. Pflanzenabdeckung (1) nach einem der vorhergehenden Ansprüche, **dadurch gekennzeichnet, dass** die Innenbegrenzungen (18) unterhalb der offenen Bereiche liegen.

18. Pflanzenabdeckung (1) nach einem der vorhergehenden Ansprüche, **dadurch gekennzeichnet, dass** die Innenbegrenzungen (18) mittels einer thermischen Schweißverbindung ausgebildet sind.

19. Pflanzenabdeckung (1) nach einem der vorhergehenden Ansprüche, **dadurch gekennzeichnet, dass** die Taschen in der aufliegenden Seite eine Innenlochung (20) aufweisen.

20. Pflanzenabdeckung (1) nach einem der vorhergehenden Ansprüche, **dadurch gekennzeichnet, dass** die Folie (2) und/oder das Vlies (4) eine wärmeabsorbierende Schicht aufweist.

21. Pflanzenabdeckung (1) nach einem der vorhergehenden Ansprüche, **dadurch gekennzeichnet, dass** die wärmeabsorbierende Schicht eine schwarze Farbschicht umfasst.

22. Pflanzenabdeckung (1) nach einem der vorhergehenden Ansprüche, **dadurch gekennzeichnet, dass** die Folie (2) und/oder das Vlies (4) eine wärmereflektierende Schicht aufweist.

23. Pflanzenabdeckung (1) nach einem der vorhergehenden Ansprüche, **dadurch gekennzeichnet, dass** die wärmereflektierende Schicht eine weiße oder silberne Schicht umfasst.

24. Verwendung einer Pflanzenabdeckung nach einem der Ansprüche 1 - 23 als Wassertaschenfolienvlies für Hügelbeete (10).
